# EUROPEAN PATENT SPECIFICATION

(11) **EP 3 382 089 B1**
(45) Date of publication and mention of the grant of the patent: **02.12.2020**
(21) Application number: 18162001.4
(22) Date of filing: 15.03.2018
(51) Int. Cl.: D06F 75/14, D06F 75/12, F22B 1/28, G01F 23/24, D06F 75/26

(54) **STEAM IRONING APPARATUS FOR DETECTING A LACK OF WATER**
DAMPFBÜGELVORRICHTUNG ZUR ERKENNUNG VON WASSERMANGEL
APPAREIL DE REPASSAGE À VAPEUR POUR LA DÉTECTION D'UN MANQUE D'EAU

(30) Priority: 31.03.2017 ES 201730548
(43) Date of publication of application: 03.10.2018
(73) Proprietor: SDA FACTORY VITORIA SLU, 01010 Vitoria Gasteiz Araba (ES)
(72) Inventor: Lavezzari, Stefano, 01015 Vitoria (Alava) (ES); Goldaracena Jaca, Martin, 01192 Gazeta (Álava) (ES)
(74) Representative: González Peces, Gustavo Adolfo

(56) References cited:
- EP-A1- 0 877 200
- WO-A1-2008/120130
- WO-A1-2009/083417
- WO-A1-2015/150303
- WO-A1-2017/202706
- CN-A- 104 329 658
- US-B1- 6 178 671

## Description

### Field of the invention

The invention relates to a steam ironing apparatus. The invention further relates to a method for monitoring a generation of steam in a steam ironing apparatus.

### Background of the invention

German Patent DE 195 34 464 C1 describes an apparatus for preventing a running dry of an electromagnetic piston pump, in particular an electromagnetic piston pump used in a steam iron. The pump current and the pump voltage of the piston pump are monitored and analyzed and harmonics that are generated when the pump runs dry are extracted by means of signal processing, wherein a signal for shutting down the pump or a warning signal for the user is derived therefrom.

German Utility Model DE 20 2008 012 897 U1 describes a steam ironing station with an underframe, wherein in the underframe, a water tank, a steam generator and a pump arranged between the water tank and the steam generator are accommodated. In the water tank, a level sensor is arranged, said level sensor being configured for determining a fill level of the water tank.

European patent EP 1 870 641 B1 describes a vaporiser device having an evaporator for water, in particular a steam cooker, wherein the evaporator includes a heated water tank. The evaporator also includes a detection zone for detecting the filling level of the water tank and connected to the water tank according to the principle of communicating pipes. The detection zone preferably is in a tubular and/or duct-type design and has at least one sensor zone for detecting the filling level. The detection zone is disposed in a lateral zone of the evaporator and an interior compartment of the detection zone is separated from the water supply by means of a partition.

In US patent application US 2009/0151206 A1, a method and a device for automatically replenishing water for a boiler iron under the condition of continuous steaming are disclosed. The device comprises a normally-closed pressure switch that can control power on/off of the boiler according to the pressure in the boiler and a normally-closed thermostat for keeping the boiler in a thermostatic state. The method comprises a step of determining whether the thermostat switch is off. If the thermostat switch is off, the pump is controlled to pump a large amount of water into the boiler. If the thermostat switch is not off, it is detected whether the steam is needed to be ejected. If the steam is needed to be ejected, the electromagnetic valve is opened to eject steam, while at the same time a relatively small amount of water is pumped into the boiler by controlling the pump.

US patent application US 2013/0126507 A1 describes a waterless detection method and a waterless detection device of a boiler iron and an iron applied with the device thereof, wherein the method is applied with a normally closed thermostat of the constant temperature boiler and a control device. At least a signal line is connected between the thermostat of the boiler and the control device, wherein the control device receives the off and on state information of the thermostat and judges the presence of the water in the water tank.

European patent EP 0 843 039 B1 describes a steam generator with an evaporation boiler associated with heater elements and fed with water by a pump, a solenoid valve for expelling the steam, and regulator means including a temperature sensor or a pressure sensor for monitoring the quantity of water introduced into the boiler and for controlling the pump. The regulator means are associated with an electronic system for taking successive measurements for actuating the pump as a function of the value of the slope of a curve representing variation in temperature or pressure, said slope being analysed by the electronic system.

European patent EP 1 300 503 B1 describes a steam generator comprising a tank designed to be filled with water and then heated to generate steam at a pressure greater than atmospheric pressure, the steam generator further comprising an electronic device for determining and displaying the water level. The device for determining the water level comprises means for computing an initial water level as a function of the first heating temperature curve, means for computing, at each tapping operation, the product of the mass delivery rate of steam multiplied by the length of time of said tapping operation, corresponding to the mass of water tapped in the form of steam, and means for computing each residual water level.

International patent application WO 2015/150303 A1 relates to an apparatus that includes a steam generator, such as an iron for clothing, and a method of controlling such an apparatus.

US patent US 6178671 B1 relates to a steam iron with calcification indication, which comprises an indicator for indicating calcification, a control unit which comprises a timer for measuring an accumulated time of use of the steam iron, and for activating the indicator when the accumulated time exceeds a predetermined threshold level.

### Object of the invention

It is an object of the invention to provide a steam iron apparatus that allows to detect whether or not there is water in a water tank. Furthermore, it is an object of the invention to provide such a detection at low cost with a minimum of additional hardware.

### Summary of the invention

According to the invention, a steam ironing apparatus is provided, the steam ironing apparatus comprising comprising a soleplate with a steam chamber having a plurality of steam outlet ports configured for emitting steam, a heating element disposed in thermal contact with the soleplate, the heating element being adapted for heating the soleplate, a water tank in fluidic connection with a motor pump, the motor pump being adapted for supplying water to the steam chamber for generating steam,a temperature sensor disposed in thermal contact with the soleplate, the temperature sensor being adapted for generating a temperature signal in dependence on the temperature of the soleplate, a control unit connected to the heating element, the temperature sensor and the motor pump, wherein the control unit is adapted for evaluating, upon activation of the motor pump, a subsequent signal progression of the temperature signal and for deriving from said signal progression whether or not there is water in the water tank; wherein the signal progression of the temperature signal upon activation of the motor pump is the variation of the temperature signal as a function of time after the motor pump's operation is started;wherein the control unit is adapted for determining, upon activation of the motor pump if there is a cooling effect related to the flow of water supplied by the motor pump, such that in case the signal progression indicates a cooling of the soleplate, this cooling effect indicates that there still is water in the water tank; and wherein in case there is no such cooling, the control unit determines that the water tank is empty.

In a steam ironing apparatus comprising a motor pump and a water tank, the motor pump is configured for supplying a flow of water to the soleplate. There, the water is evaporated, and steam is emitted at a plurality of steam outlet ports. During operation of the steam ironing apparatus, it should be avoided that the motor pump runs dry. Running dry may have detrimental effects on the motor pump, for example, the motor pump may overheat, there may be abrasion and wear of the motor pump, etc. In general, running dry may decrease the lifespan of the motor pump. For this reason, it is desirable to detect when the water tank runs out of water. However, providing an additional fill level sensor is not desirable, because it adds to the complexity and weight of the device and increases the hardware cost.

According to the present invention, a temperature sensor located in thermal contact with the soleplate is used for detecting whether or not there is water in the water tank. The detection of whether or not the water tank is empty is based on the finding that the flow of water supplied to the soleplate provides a cooling effect of the soleplate. Hence, in case the motor pump conveys a flow of water to the soleplate, the soleplate is cooled. In case there is no more water in the water tank and the motor pump runs dry, no water is supplied to the soleplate, and accordingly, the soleplate is not cooled. Hence, for detecting whether or not the water tank is empty, the signal progression of the temperature signal upon activation of the motor pump is evaluated. The signal progression of the temperature signal upon activation of the motor pump is the variation of the temperature signal as a function of time after the motor pump's operation is started. I Z Since this signal progression indicates a cooling of the soleplate, this cooling effect indicates that there still is water in the water tank. In case there is no such cooling, the control unit determines that the water tank is empty. In this case, an indication may for example be provided to the user, or the motor pump may for example be shut down.

A steam ironing apparatus is equipped with said temperature sensor being used for controlling the temperature of the soleplate. This temperature sensor is used for detecting whether or not the water tank is empty.

The present invention provides a simple and low cost detection of an empty water tank in a steam ironing apparatus. By implementing the invention, a running dry of the motor pump can be avoided or at least reduced, and thus, the lifetime of the motor pump is increased.

Further according to the invention, a method for monitoring a generation of steam in a steam ironing apparatus, the steam ironing apparatus comprising a soleplate with a plurality of steam outlet ports configured for emitting steam, a heating element disposed in thermal contact with the soleplate, the heating element being adapted for heating the soleplate, a water tank in fluidic connection with a motor pump, the motor pump being adapted for supplying water to the soleplate for generating steam, a temperature sensor disposed in thermal contact with the soleplate, the temperature sensor being adapted for generating a temperature signal in dependence on the temperature of the soleplate, and for providing said temperature signal to a control unit; wherein the method comprises evaluating, upon activation of the motor pump, a subsequent signal progression of the temperature signal and deriving from said signal progression whether or not there is water in the water tank; wherein the signal progression of the temperature signal upon activation of the motor pump is the variation of the temperature signal as a function of time after the motor pump's operation is started; the method further comprises a step of determining, upon activation of the motor pump, if there is a subsequent decline of the temperature indicated by the temperature signal, said temperature decline indicating that water is supplied to the soleplate; such that in case the signal progression indicates a cooling of the soleplate, this cooling effect indicates that there still is water in the water tank; and wherein in case there is no such cooling, the control unit determines that the water tank is empty.

The step of evaluating a signal progression of the temperature signal can for example be performed by signal processing. For example, the steam ironing apparatus may comprise a signal processor for controlling the operation of the apparatus. In this case, it is sufficient to provide an additional software routine for evaluating the signal progression of the temperature signal upon activation of the motor pump.

### Preferred embodiments of the invention

Preferred features of the invention are discussed below and in the dependent claims.

The control unit is adapted for determining, upon activation of the motor pump, if there is a cooling effect related to the flow of water supplied by the motor pump. If the motor pump supplies a flow of water to the soleplate, in order to generate steam, the soleplate will be cooled. As a consequence, if water is supplied to the soleplate, a decline of the soleplate' temperature will be observed.

Preferably, the control unit is adapted for determining, upon activation of the motor pump, whether or not there is a subsequent decline of the soleplate's temperature. By evaluating the signal progression of the temperature signal provided by the temperature sensor, the control unit is capable of detecting the decline of the soleplate's temperature. The control unit is adapted for performing signal processing of the temperature signal.

Preferably, in case the control unit determines that upon activation of the motor pump, there is no subsequent decline of the soleplate's temperature indicated by the temperature signal, the missing decline indicates that the water tank is empty. In case no water is supplied to the soleplate, there will not be any cooling effect, and accordingly, the temperature of the soleplate remains stable. In this case, the water tank is empty.

Preferably, in case the control unit determines that upon activation of the motor pump, there is a subsequent decline of the soleplate's temperature indicated by the temperature signal, the decline indicates that water is supplied to the soleplate. In case water is supplied to the soleplate, there will be a cooling effect, and accordingly, a corresponding temperature decline can be observed.

Preferably, the control unit is adapted for determining, upon activation of the motor pump, if there is a subsequent decline of the soleplate's temperature indicated by the temperature signal, and for detecting, in case there is a decline, that water is supplied to the soleplate. In the control unit, in case the evaluation of the temperature signal's progression shows that there is a decline, the control unit detects that there is still enough water in the water tank.

Preferably, the control unit is adapted for determining, upon activation of the motor pump, if there is a subsequent decline of the soleplate's temperature indicated by the temperature signal, and for detecting, in case there is no decline of the soleplate's temperature, that the water tank is empty. In this case, the evaluation of the temperature signal's progression does not yield any decline of the temperature. Accordingly, the control unit detects that no water is supplied to the soleplate and that the water tank is empty.

Preferably, in case the control unit determines that upon activation of the motor pump, there is no subsequent decline of the soleplate's temperature indicated by the temperature signal, the control unit is configured to provide an indication to a user that the water tank is empty. In general, it should be avoided that the motor pump runs dry. Accordingly, the user should be informed that the water tank should be refilled, in order to avoid any detrimental effects on the motor pump. For example, a light signal or a sound signal may be provided to the user.

Preferably, in case the control unit determines that upon activation of the motor pump, there is no subsequent decline of the soleplate's temperature indicated by the temperature signal, the control unit is configured to shut off the motor pump. Thus, it is prevented that the motor pump is running dry, thereby avoiding any detrimental effects on the motor pump. As soon as the water tank has been filled with water, operation of the motor pump may be resumed.

Preferably, the control unit is adapted for evaluating the signal progression of the temperature signal during a predetermined time interval starting at an onset of the motor pump's operation. Preferably, the control unit is adapted for evaluating the signal progression of the temperature signal during a time interval of up to several seconds starting at the onset of the motor pump's operation.

Preferably, the steam ironing apparatus comprises a steam button, wherein upon pressing the steam button, a steam trigger signal is provided to the control unit. Further preferably, upon receipt of the steam trigger signal, the control unit is configured for activating the motor pump and for evaluating the signal progression of the temperature signal. Hence, the steam trigger signal may initiate both the operation of the motor pump and the evaluation of the temperature signal provided by the temperature sensor. Hence, in addition to starting the motor pump, the steam trigger signal also initiates a detection of whether or not the water tank is empty.

Preferably, the control unit is adapted for evaluating at least the following signals: a steam trigger signal for activating the motor pump or a signal indicating the motor pump's operation and the temperature signal of the temperature sensor. The onset of the motor pump's operation is indicated either by the steam trigger signal or by the signal that indicates the motor pump's operation. As soon as the pump's operation is started, the temperature signal supplied by the temperature sensor is evaluated, in order to find out whether or not there is a characteristic decline of the soleplate's temperature.

Preferably, the control unit is further adapted for evaluating a signal indicating the heating element's operation. When supplying a flow of water to the soleplate, the soleplate is cooled, and accordingly, the heating element may be switched on by the control unit to reheat the soleplate to a target temperature. Accordingly, for evaluating the signal progression of the temperature signal, it may be useful to consider a signal indicating the heating element's operation.

Preferably, the control unit is adapted for considering a time delay between a start of the motor pump's operation and a subsequent decline of the soleplate's temperature indicated by the temperature signal. When supplying a flow of water to the soleplate, there may be a time delay of up to several seconds between the onset of the pump's operation and the temperature decline of the soleplate's temperature. Accordingly, it is advantageous to consider the expectation value of this time delay when evaluating the signal progression of the temperature signal.

Preferably, the motor pump is fluidically connected via at least one fluid conduit of the steam chamber with the steam outlet ports of the soleplate. Thus, the flow of water delivered by the motor pump can be supplied to the steam outlet ports.

Preferably, when passing through the at least one fluid conduit of the steam chamber and/or the steam outlet ports, the water supplied by the motor pump is converted to steam. During its passage through the hot soleplate, the water heats up and is evaporated.

Preferably, the temperature sensor is a temperature dependent resistor. In this case, the voltage drop across the temperature dependent resistor can be used as a temperature signal indicating the soleplate's temperature. Further preferably, the temperature sensor is an NTC resistor. An NTC resistor has a negative temperature coefficient, which means that a decline of the measured temperature corresponds to a rise of the NTC resistor's resistance.

Preferably, the control unit is implemented as a micro-controller. In a micro-controller, an additional routine for evaluating the signal progression of the temperature signal can be realised by programming an additional software routine for signal processing and storing said software routine into the micro-controller's storage.

Preferably, the control unit is adapted for controlling the heating element's operation in dependence on the temperature signal provided by the temperature sensor. Preferably, the temperature sensor is part of a closed-loop control of the soleplate's temperature. Preferably, the control unit is adapted for controlling the heating element's operation in a way that the soleplate's temperature is kept at a predetermined target temperature. The target temperature may for example be selected by the user.

Preferably, the control unit is further adapted for controlling the motor pump's operation. Preferably, the control unit is adapted for controlling both the heating element's operation and the motor pump's operation. Further preferably, the control unit is adapted for controlling a flow rate provided by the motor pump. For example, for controlling the flow rate provided by the motor pump, the control unit may increase or reduce a supply voltage or a control voltage of the motor pump. As a further possibility, the control unit may for example control wave trains of an oscillatory driving signal of the motor pump. Preferably, the control unit may be configured for switching off the motor pump in case the temperature of the soleplate is too low for generating steam. Further preferably, the control unit may be configured for switching off the motor pump in case it detects that there is no water in the water tank.

Preferably, the control unit is adapted for providing a temperature control of the soleplate's temperature in dependence on the temperature signal provided by the temperature sensor. Preferably, the control unit is adapted for providing a closed loop control of the soleplate's temperature in dependence on the temperature signal provided by the temperature sensor. Further preferably, the control unit is adapted for providing a thermostatic control or a Proportional-Integral-Derivative (PID) control of the soleplate's temperature in dependence on the temperature signal provided by the temperature sensor. Preferably, the control unit is adapted for providing a thermostatic control of the soleplate's temperature and for controlling on and off periods of the heating element in dependence on the temperature signal provided by the temperature sensor. For example, if the soleplate's temperature falls below a predefined temperature level, the heating element will be activated. As soon as the target temperature is reached, the heating element is switched off again.

Preferably, the temperature sensor is used both for a temperature control of the soleplate's temperature and for determining whether or not the water tank is empty. The temperature sensor may be used for two different purposes: Firstly, the temperature sensor may be part of a temperature control for controlling the soleplate's temperature, whereby the heating element's operation is controlled in dependence on the temperature signal provided by the temperature sensor. Secondly, the temperature sensor is used for detecting whether or not there is water in the water tank. For this purpose, the signal progression of the temperature signal after the onset of the pump's operation is evaluated. Using a single temperature sensor for two different purposes allows for reducing the cost of the steam ironing apparatus. In fact, only an additional software routine is required for evaluating the temperature signal.

Preferably, the steam ironing apparatus is a motor steam iron, with the water tank and the motor pump being located in the motor steam iron's housing. By including the water tank and the motor pump in the steam iron, it is possible to provide a compact stand-alone motor steam iron.

Preferably, the steam ironing apparatus comprises a steam iron and an external water supply unit, with the external water supply unit comprising the water tank and the motor pump, wherein the external water supply unit is fluidically connected via an interconnection tube with the steam iron. By providing an external water supply unit comprising the water tank and the motor pump, a light-weight steam iron can be realised, wherein the steam iron is connected to the external water supply unit via the interconnection tube. Preferably, the external water supply unit is adapted for supplying water to the steam iron. In the steam iron, the water received from the external water supply unit is heated up by the hot soleplate.

### Brief description of the drawings

The invention is illustrated in greater detail with the aid of schematic drawings. It shows schematically:
- Figure 1:: Fig. 1 shows a motor steam iron with a motor pump and a water tank arranged within the housing.
- Figure 2a:: Fig. 2a shows the temperature signal of a NTC resistor as a function of time.
- Figure 2b:: Fig. 2b shows the temperature of the soleplate as a function of time.
- Figure 3:: Fig. 3 shows a steam ironing device comprising a steam iron and an external water supply unit fluidically connected with the steam iron via an interconnection tube.

### Detailed description of embodiments of the invention

In the following description of preferred embodiments of the present invention, identical reference numerals denote identical or comparable components.

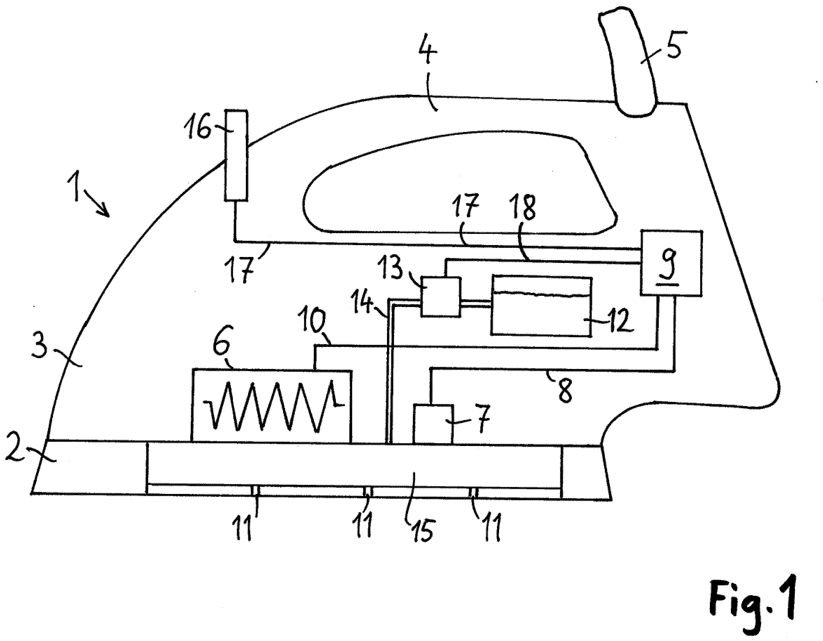

Figure 1 shows a side view of motor steam iron 1, the motor steam iron 1 comprising a soleplate 2, a housing 3 with a handle 4 and a power cable 5, with the power cable 5 supplying electrical power to the motor steam iron 1. For heating the soleplate 2, a heating element 6 is arranged in thermal contact with the soleplate 2. In order to realise a temperature control of the soleplate's temperature, a temperature sensor 7 is disposed in thermal contact with the soleplate 2. The temperature sensor 7 is configured for generating a temperature signal 8 that depends on the actual temperature of the soleplate 2 and for providing said temperature signal 8 to a control unit 9. The temperature sensor 7 may for example be a NTC resistor. A NTC resistor is characterised by a negative temperature coefficient, which means that the higher the temperature gets, the lower the resistance of the NTC resistor will be. The temperature signal 8 may for example be a voltage across the NTC resistor.

The control unit 9 is configured for providing a temperature control of the soleplate's temperature. In dependence on the temperature indicated by the temperature signal 8, the operation of the heating element 6 is controlled such that the temperature of the soleplate 2 is kept at a predetermined target temperature. The control unit 9 may for example be configured for providing a closed loop control of the soleplate's temperature based on the temperature signal 8. In particular, the control unit 9 may for example be configured for providing a thermostatic control or an intelligent temperature control of the soleplate's temperature, for example a Proportional-Integral-Derivative (PID) control of the soleplate's temperature. A Proportional-Integral-Derivative (PID) control may for example control the temperature of the soleplate 2 in dependence on the temperature signal 8, with the control behaviour being defined by at least one of proportional terms, integral terms and derivative terms. For controlling the operation of the heating element 6, the control unit 9 generates a heating element control signal 10. In this regard, the soleplate 2, the temperature sensor 7, the control unit 9 and the heating element 6 form a closed-loop control configured for keeping the soleplate's temperature at a predetermined target temperature. The target temperature may for example be chosen in dependence on the respective fabric that is ironed.

The motor steam iron 1 is further capable of emitting steam at a plurality of steam outlet ports 11 located in the soleplate 2. For generating steam, a water tank 12 is fluidically connected via a motor pump 13 with a water supply line 14. The water supply line 14 is connected to the steam chamber 15 being adapted for supplying steam to the steam outlet ports 11 in the soleplate 2.

In addition to providing a temperature control of the soleplate's temperature, the control unit 9 may also control the operation of the motor pump 13. For example, the control unit 9 may control the flow rate of the motor pump 13 by increasing or reducing a supply voltage or a control signal of the motor pump 13 or by controlling wave trains of an oscillatory driving signal of the motor pump 13. Furthermore, the control unit 9 may for example be configured for switching off the motor pump 13 in case the temperature of the soleplate 2 is too low for generating steam. Furthermore, the control unit 9 may for example be configured for shutting off the motor pump 13 in case the motor pump 13 is running dry.

When the user presses the steam button 16, a steam trigger signal 17 is set, said steam trigger signal 17 being provided to the control unit 9. In response to the steam trigger signal 17, the control unit 9 sets the motor pump control signal 18 and activates the motor pump 13. The motor pump 13 is switched on and supplies water from the water tank 12 via the water supply line 14 and the steam chamber 15 to the steam outlet ports 11. When the water passes through the steam chamber 15, the water is evaporated, and steam is emitted at the steam outlet ports 11.

During operation, the water tank 12 may become empty, and as a consequence, the motor pump 13 may run dry. When the motor pump 13 is running dry over a certain period of time, the pump may for example be overheated. In general, a dry run of the motor pump 13 should be avoided, because it may have detrimental effects on the motor pump 13 and may shorten the pump's lifetime.

It has been found that whenever a flow of water is supplied to the soleplate 2 via the water supply line 14, a cooling effect is observed. Accordingly, whenever a flow of water is supplied via the water supply line 14 to the steam outlet ports 11, the temperature sensor 7 will detect a subsequent decline of the soleplate's temperature. This cooling effect can be used for detecting whether or not the water tank 12 is empty. If the water tank 12 is filled with water and the motor pump 13 is switched on, there will be a cooling effect, and the temperature sensor 7 will detect a subsequent decline of the soleplate's temperature. In contrast, if the water tank 12 is empty and the motor pump 13 is switched on, no water will be supplied to the soleplate 2 and no cooling of the soleplate 2 will occur. In this case, the temperature of the soleplate 2 will remain stable and the temperature sensor 7 will not detect any decline of the soleplate's temperature. Hence, detecting whether or not there is a decline of the soleplate's temperature upon activation of the motor pump 13 allows for determining whether the water tank 12 contains water or not. For detecting the characteristic temperature decline, the signal progression of the temperature signal 8 provided by the temperature sensor 7 is evaluated by the control unit 9. Preferably, the control unit 9 is a micro-controller capable of performing the respective signal processing of the temperature signal 8.

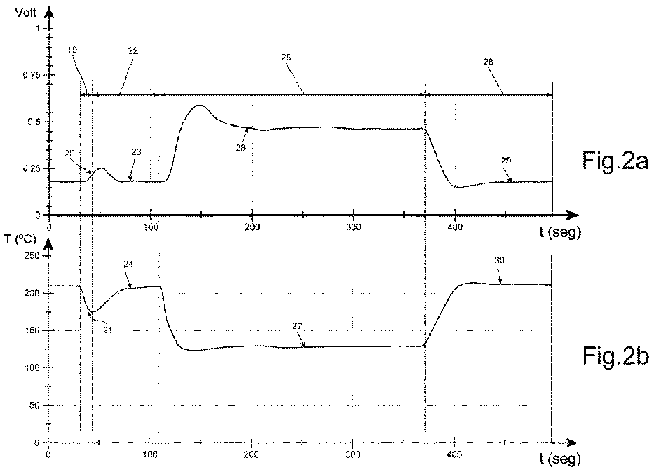

In figures 2a and 2b, the temperature response of the soleplate's temperature upon activation of the motor pump 13 is shown. In figure 2a, the temperature signal 8 provided by the temperature sensor 7 is depicted as a function of time. A NTC resistor of the steam ironing apparatus is employed as a temperature sensor, wherein the voltage across the NTC resistor is used as a temperature signal 8. Along the x-axis, the time in seconds is indicated, and along the y-axis, the voltage across the NTC resistor in volts is shown. The resistance of a NTC resistor decreases with increasing temperature, and accordingly, an increase of the voltage corresponds to a decline of the soleplate's temperature.

The figure 2b represents the temperature of the ironing surface of the soleplate is depicted as a function of time. The temperature sensor for measuring the temperature of the soleplate in the figure 2b does not belong to the ironing apparatus and is located in the ironing surface of the soleplate, not in the same position of the NTC. The temperature in figure 2b develops in the inverse way than the NTC voltage in figure 2a. When the voltage rises, the temperature declines and the other way around. A certain time gap can be observed between both graphs since, in this example, the position of the soleplate surface temperature sensor is not the same than the position of the NTC sensor.

The temperature signal 8 provided by the temperature sensor 7 is indicative of the soleplate's temperature and can be converted into the soleplate's temperature. In figure 2b, the temperature of the soleplate 2 is shown as a function of time. The time in seconds is indicated along the x-axis, and along the y-axis, the temperature of the soleplate 2 in °C is shown.

During a time interval 19, the motor pump 13 is activated. The water tank 12 contains water, and therefore, a flow of water is supplied to the soleplate 2. After a time delay of up to several seconds, a subsequent rise 20 of the voltage across the NTC resistor is observed. As shown in figure 2b, the rise 20 of the voltage corresponds to a decline 21 of the soleplate's temperature, which is due to the cooling effect provided by the flow of water.

During a subsequent time interval 22, the motor pump 13 is still switched on, but in this case, the water tank 12 is empty. Accordingly, the motor pump 13 is running dry, and no flow of water is supplied to the soleplate. In section 23 of the temperature signal 8, there is a voltage drop across the NTC resistor and then the voltage remains stable close to the target value, and no rise of the voltage is observed anymore. In figure 2b, it can be seen that in the corresponding section 24, no decline of the soleplate's temperature can be observed. As example, NTC decreases about 0.06V in 15 seconds and then it remains stable to the target value of 0.18V that corresponds to a temperature of about 210°C.

During an extended time interval 25, the motor pump 13 is still switched on. The water tank 12 contains water and a flow of water is supplied to the soleplate. From figure 2a, it can be seen that there is a rise 26 of the voltage across the NTC resistor, which corresponds to a decline 27 of the temperature of the soleplate that is caused by the flow of water. After it, there is a slow voltage drop across the NTC resistor and the voltage remains stable at a higher value than the target value. As example, the target value is 0.18V and the NTC voltage is stable at 0.46V that corresponds to a temperature of about 125°C.

Then, during an extended time interval 28, the motor pump 13 is active, but the water tank 12 is empty and accordingly, there is no cooling effect. In section 29 of the temperature signal 8, there is a voltage drop across the NTC resistor and then the voltage remains unchanged at the target value, and no rise of the voltage is observed anymore. In figure 2b, it can be seen that at that point there is no decline of the soleplate's temperature. Hence, by evaluating the time course of the temperature signal 8 after activating the motor pump 13, it is possible to detect whether the water tank 12 is empty or not. As example, the target value is 0.18V and there is a voltage drop across the NTC resistor in 30 seconds from 0.46V until it reaches the target value.

The temperature control provided by the control unit 9 is configured for keeping the temperature of the soleplate 2 at a preselected target temperature. For this reason, the decline of the temperature caused by the flow of water may cause an activation of the heating element 6, in order to raise the soleplate's temperature to the target temperature.

For evaluating whether or not the water tank 12 is empty, the control unit 9 may process up to four different signals. Firstly, the steam trigger signal 17 and/or the corresponding motor pump control signal 18 may be evaluated, with said signals indicating a start of the motor pump's operation. Secondly, the temperature signal 8 provided by the temperature sensor 7 is evaluated by the control unit 9, with the time course of said temperature signal 8 indicating whether or not the water tank 12 is filled with water. Thirdly, the heating element control signal 10 may additionally be considered when evaluating the temperature signal 8, with said heating element control signal 10 indicating the heating element's activity. For effecting the required signal processing, the control unit 9 may be implemented as a micro-controller, with the micro-controller comprising an additional software routine stored in the micro-controller's memory, said software routine being configured for evaluating the time course of the temperature signal 8.

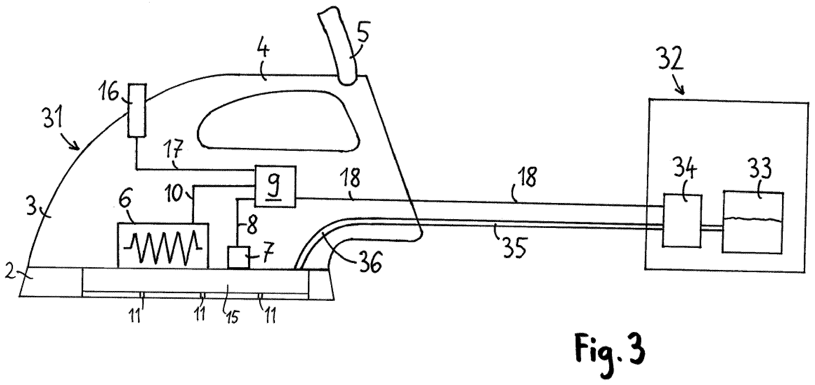

Figure 3 shows another example for implementing the present invention. The steam ironing device shown in figure 3 comprises a steam iron 31 and an external water supply unit 32, wherein a water tank 33 and a motor pump 34 are accommodated in the external water supply unit 32. The external water supply unit 32 is fluidically connected with the steam iron 31 via an interconnection tube 35, whereby water for steam generation is supplied via the interconnection tube 35 to the steam iron 31. By arranging both the water tank 33 and the motor pump 34 in the external water supply unit 32, the steam iron 31 can be realised as a light-weight iron that is easy to handle.

The steam iron 31 comprises a housing 3 with a handle 4, a power cable 5 and a soleplate 2, with a heating element 6 being configured for heating the soleplate 2. For realising a temperature control of the soleplate's temperature, the steam iron 31 comprises a temperature sensor 7 disposed in thermal contact with the soleplate 2. The temperature sensor 7 generates a temperature signal 8 that indicates the temperature of the soleplate 2. The temperature signal 8 is provided to the control unit 9. In dependence on the temperature signal 8, the control unit 9 generates a heating element control signal 10 for controlling the operation of the heating element 6, in order to provide a temperature control of the soleplate's temperature.

The soleplate 2 comprises a plurality of steam outlet ports 11 adapted for emitting steam. When the user presses the steam button 16, a steam trigger signal 17 is forwarded to the control unit 9. In response to the steam trigger signal 17, the control unit 9 transmits a motor pump control signal 18 via a dedicated electrical line to the external water supply unit 32, in order to activate the motor pump 34. In response to this signal, the motor pump 34 starts operating and supplies a flow of water via the interconnection tube 35 to the steam iron 31. The flow of water is supplied via the water conduit 36 to the steam chamber 15 and converted into steam, to the steam outlet ports 11. When passing through the hot steam chamber, the water is converted to steam, the steam being emitted via the steam outlet ports 11.

In case water is supplied via the interconnection tube 35 and the water conduit 36to the steam chamber 15, the water will provide for a cooling of the soleplate 2. Accordingly, after the onset of the motor pump's operation, a subsequent decline of the soleplate's temperature will occur in case water is supplied to the soleplate 2. In case the water tank 33 is empty, no such decline of the soleplate's temperature is observed after the motor pump 34 has started operating, which indicates that the motor pump 34 is running dry. The detection principle described with regard to figure 1 and figures 2a and 2b can be applied to the steam ironing apparatus shown in figure 3 as well. Upon the start of the motor pump's operation, the temperature signal 8 is evaluated by the control unit 9, which is preferably implemented as a micro-controller. In case the control unit 9 detects a decline of the soleplate's temperature upon start of the motor pump's operation, this indicates that water is supplied to the soleplate 2. In case no decline of the soleplate's temperature is detected upon start of the motor pump's operation, this indicates that the water tank 33 is empty. In this case, the control unit 9 may provide an indication to the user that the water tank 33 is empty and should be refilled. Additionally or alternatively, the control unit 9 may initiate a shut-down of the water pump 34 to prevent that the water pump 34 runs dry. Thus, overheating of the water pump 34 is prevented and the lifetime of the water pump 34 is extended.

The features described in the above description, claims and figures can be relevant to the invention in any combination. Their reference numerals in the claims have merely been introduced to facilitate reading of the claims. They are by no means meant to be limiting.

### LIST OF REFERENCE NUMERALS

- 1: motor steam iron
- 2: soleplate
- 3: housing
- 4: handle
- 5: power cable
- 6: heating element
- 7: temperature sensor
- 8: temperature signal
- 9: control unit
- 10: heating element control signal
- 11: steam outlet ports
- 12: water tank
- 13: motor pump
- 14: water supply line
- 15: steam chamber
- 16: steam button
- 17: steam trigger signal
- 18: motor pump control signal
- 19: time interval
- 20: rise of voltage across the temperature sensor
- 21: decline of the soleplate's temperature
- 22: time interval
- 23: section of constant voltage
- 24: section of constant temperature
- 25: extended time interval
- 26: rise of voltage across the temperature sensor
- 27: decline of the soleplate's temperature
- 28: extended time interval
- 29: section of constant voltage
- 30: section of constant temperature
- 31: steam iron
- 32: external water supply unit
- 33: water tank
- 34: motor pump
- 35: interconnection tube
- 36: water conduit

## Claims

1. Steam ironing apparatus comprising
a soleplate (2) with a steam chamber (15) having a plurality of steam outlet ports (11) configured for emitting steam,
a heating element (6) disposed in thermal contact with the soleplate (2), the heating element (6) being adapted for heating the soleplate (2),
a water tank (12, 33) in fluidic connection with a motor pump (13, 34), the motor pump (13, 34) being adapted for supplying water to the steam chamber (15) for generating steam,
a temperature sensor (7) disposed in thermal contact with the soleplate (2), the temperature sensor (7) being adapted for generating a temperature signal (8) in dependence on the temperature of the soleplate (2),
a control unit (9) connected to the heating element (6), the temperature sensor (7) and the motor pump (13, 34),
**characterised in that**
the control unit (9) is adapted for evaluating, upon activation of the motor pump (13, 34), a subsequent signal progression of the temperature signal (8) and for deriving from said signal progression whether or not there is water in the water tank (12, 33); wherein the signal progression of the temperature signal (8) upon activation of the motor pump (13, 34) is the variation of the temperature signal (8) as a function of time after the motor pump's (13, 34) operation is started;
wherein the control unit (9) is adapted for determining, upon activation of the motor pump (13, 34) if there is a cooling effect related to the flow of water supplied by the motor pump (13, 34),
such that in case the signal progression indicates a cooling of the soleplate (2), this cooling effect indicates that there still is water in the water tank (12, 33); and wherein in case there is no such cooling, the control unit (9) determines that the water tank (12, 33) is empty.

2. Steam ironing apparatus according to claim 1, wherein the control unit (9) is adapted for determining, upon activation of the motor pump (13, 34), whether or not there is a subsequent decline of the soleplate's (2) temperature.

3. Steam ironing apparatus according to any one of claims 1 to 2, wherein the control unit (9) is adapted for determining, upon activation of the motor pump (13, 34), if there is a subsequent decline of the soleplate's (2) temperature indicated by the temperature signal (8), and for detecting, in case there is a decline, that water is supplied to the soleplate (2).

4. Steam ironing apparatus according to any one of claims 1 to 3 wherein the control unit (9) is adapted for determining, upon activation of the motor pump (13, 34), if there is a subsequent decline of the soleplate's (2) temperature indicated by the temperature signal (8), and for detecting, in case there is no decline of the soleplate's (2) temperature, that the water tank (12, 33) is empty.

5. Steam ironing apparatus according to any one of claims 1 to 4, wherein in case the control unit (9) determines that upon activation of the motor pump (13, 34), there is no subsequent decline of the soleplate's (2) temperature indicated by the temperature signal (8), the control unit (9) is configured to shut off the motor pump (13,34).

6. Steam ironing apparatus according to any one of claims 1 to 5, wherein the control unit (9) is adapted for evaluating at least the following signals: a steam trigger signal (17) for activating the motor pump (13, 34) or a signal (18) indicating the motor pump's operation and the temperature signal (8) of the temperature sensor (7).

7. Steam ironing apparatus according to any one of claims 1 to 6, wherein the control unit (9) is adapted for controlling the heating element's (6) operation in dependence on the temperature signal (8) provided by the temperature sensor (7).

8. Steam ironing apparatus according to any one of claims 1 to 7, wherein the control unit (9) is adapted for providing a temperature control of the soleplate's (2) temperature in dependence on the temperature signal (8) provided by the temperature sensor (7).

9. Steam ironing apparatus according to any one of claims 1 to 8, wherein the temperature sensor (7) is used both for a temperature control of the soleplate's (2) temperature and for determining whether or not the water tank (12, 33) is empty.

10. Steam ironing apparatus according to any one of claims 1 to 9, wherein the steam ironing apparatus is a motor steam iron (1), with the water tank (12) and the motor pump (13) being located in the motor steam iron (1)'s housing (3).

11. Steam ironing apparatus according to any one of claims 1 to 9, wherein the steam ironing apparatus comprises a steam iron (31) and an external water supply unit (32), with the external water supply unit (32) comprising the water tank (33) and the motor pump (34), wherein the external water supply unit (32) is fluidically connected via an interconnection tube (35) with the steam iron (31).

12. Method for monitoring a generation of steam in a steam ironing apparatus,
the steam ironing apparatus comprising
a soleplate (2) with a plurality of steam outlet ports (11) configured for emitting steam,
a heating element (6) disposed in thermal contact with the soleplate (2), the heating element (6) being adapted for heating the soleplate (2),
a water tank (12, 33) in fluidic connection with a motor pump (13, 34), the motor pump (13, 34) being adapted for supplying water to the soleplate (2) for generating steam,
a temperature sensor (7) disposed in thermal contact with the soleplate (2), the temperature sensor (7) being adapted for generating a temperature signal (8) in dependence on the temperature of the soleplate (2), and for providing said temperature signal (8) to a control unit (9);
wherein the method comprises
evaluating, upon activation of the motor pump (13, 34), a subsequent signal progression of the temperature signal (8) and deriving from said signal progression whether or not there is water in the water tank (12, 33);
wherein the signal progression of the temperature signal (8) upon activation of the motor pump (13, 34) is the variation of the temperature signal (8) as a function of time after the motor pump's (13, 34) operation is started;
the method further comprises a step of determining, upon activation of the motor pump (13, 34), if there is a subsequent decline of the temperature indicated by the temperature signal (8), said temperature decline indicating that water is supplied to the soleplate (2);
such that in case the signal progression indicates a cooling of the soleplate (2), this cooling effect indicates that there still is water in the water tank (12, 33); and wherein in case there is no such cooling, the control unit (9) determines that the water tank (12, 33) is empty.

## Patentansprüche

1. Dampfbügelvorrichtung, umfassend
eine Sohlenplatte (2) mit einer Dampfkammer (15), welche eine Mehrzahl von Dampfaustrittsöffnungen (11) aufweist, welche dazu ausgebildet sind, Dampf abzugeben,
ein Heizelement (6), welches in thermischem Kontakt mit der Sohlenplatte (2) angeordnet ist, wobei das Heizelement (6) dazu ausgebildet ist, die Sohlenplatte (2) zu erwärmen,
einen Wassertank (12, 33) in fluidischer Verbindung mit einer Motorpumpe (13, 34), wobei die Motorpumpe (13, 34) dazu ausgebildet ist, der Dampfkammer (15) Wasser zur Erzeugung von Dampf zuzuführen,
einen Temperatursensor (7), welcher in thermischem Kontakt mit der Sohlenplatte (2) angeordnet ist, wobei der Temperatursensor (7) zum Erzeugen eines Temperatursignals (8) in Abhängigkeit von der Temperatur der Sohlenplatte (2) ausgebildet ist,
eine Steuereinheit (9), welche mit dem Heizelement (6), dem Temperatursensor (7) und der Motorpumpe (13, 34) verbunden ist,
**dadurch gekennzeichnet, dass**
die Steuereinheit (9) ausgebildet ist zum Auswerten - nach Aktivierung der Motorpumpe (13, 34) - einer nachfolgenden Signalprogression des Temperatursignals (8) und zum Ableiten aus der Signalprogression, ob Wasser in dem Wassertank (12, 33) vorhanden ist oder nicht; wobei die Signalprogression des Temperatursignals (8) nach Aktivierung der Motorpumpe (13, 34) die Variation des Temperatursignals (8) als eine Funktion der Zeit nach Beginn der Operation der Motorpumpe (13, 34) ist;
wobei die Steuereinheit (9) ausgebildet ist zum Bestimmen - nach Aktivierung der Motorpumpe (13, 34) - ob ein Kühleffekt bezogen auf den von der Motorpumpe (13, 34) zugeführten Wasserstrom auftritt,
derart, dass in dem Falle, dass die Signalprogression eine Kühlung der Sohlenplatte (2) anzeigt, dieser Kühleffekt anzeigt, dass noch Wasser in dem Wassertank (12, 33) vorhanden ist; und
wobei in dem Falle, dass keine solche Kühlung auftritt, die Steuereinheit (9) bestimmt, dass der Wassertank (12, 33) leer ist.

2. Dampfbügelvorrichtung nach Anspruch 1, wobei die Steuereinheit (9) ausgebildet ist zum Bestimmen - nach Aktivierung der Motorpumpe (13, 34) - ob ein nachfolgender Rückgang der Temperatur der Sohlenplatte (2) stattfindet oder nicht.

3. Dampfbügelvorrichtung nach einem der Ansprüche 1 bis 2, wobei die Steuereinheit (9) ausgebildet ist zum Bestimmen - nach Aktivierung der Motorpumpe (13, 34) - ob ein nachfolgender Rückgang der Temperatur der Sohlenplatte (2), welcher von dem Temperatursignal (8) angezeigt wird, stattfindet und zum Detektieren, in dem Falle, dass ein Rückgang stattfindet, dass der Sohlenplatte Wasser zugeführt wird.

4. Dampfbügelvorrichtung nach einem der Ansprüche 1 bis 3, wobei die Steuereinheit (9) ausgebildet ist zum Bestimmen - nach Aktivierung der Motorpumpe (13, 34) - ob ein nachfolgender Rückgang der Temperatur der Sohlenplatte (2), welcher von dem Temperatursignal (8) angezeigt wird, stattfindet und zum Detektieren, in dem Falle, dass kein Rückgang der Temperatur der Sohlenplatte (2) stattfindet, dass der Wassertank (12, 33) leer ist.

5. Dampfbügelvorrichtung nach einem der Ansprüche 1 bis 4, wobei in dem Falle, dass die Steuereinheit (9) bestimmt, dass nach Aktivierung der Motorpumpe (13, 34) kein nachfolgender Rückgang der Temperatur der Sohlenplatte (2) stattfindet, welche von dem Temperatursignal angezeigt wird, die Steuereinheit (9) dazu ausgebildet ist, die Motorpumpe (13, 34) abzuschalten.

6. Dampfbügelvorrichtung nach einem der Ansprüche 1 bis 5, wobei die Steuereinheit (9) ausgebildet ist zum Auswerten mindestens der folgenden Signale: ein Dampfauslösesignal (17) zum Aktivieren der Motorpumpe (13, 34) oder ein Signal (18), welches den Betrieb der Motorpumpe und das Temperatursignal (8) des Temperatursensors (7) anzeigt.

7. Dampfbügelvorrichtung nach einem der Ansprüche 1 bis 6, wobei die Steuereinheit (9) ausgebildet ist zum Steuern des Betriebs des Heizelements (6) in Abhängigkeit von dem Temperatursignal (8), welches von dem Temperatursensor (7) bereitgestellt wird.

8. Dampfbügelvorrichtung nach einem der Ansprüche 1 bis 7, wobei die Steuereinheit (9) ausgebildet ist zum Bereitstellen einer Temperaturkontrolle der Temperatur der Sohlenplatte (2) in Abhängigkeit von dem Temperatursignal (8), welches von dem Temperatursensor (7) bereitgestellt wird.

9. Dampfbügelvorrichtung nach einem der Ansprüche 1 bis 8, wobei der Temperatursensor (7) verwendet wird für eine Temperaturkontrolle der Temperatur der Sohlenplatte (2) sowie zum Bestimmen, ob der Wassertank (12, 33) leer ist oder nicht.

10. Dampfbügelvorrichtung nach einem der Ansprüche 1 bis 9, wobei die Dampfbügelvorrichtung ein Dampfbügler (1) mit Motor ist, wobei der Wassertank (12) und die Motorpumpe (13) im Gehäuse (3) des Dampfbüglers (1) mit Motor angeordnet sind.

11. Dampfbügelvorrichtung nach einem der Ansprüche 1 bis 9, wobei die Dampfbügelvorrichtung einen Dampfbügler (31) und eine externe Wasserversorgungseinheit (32) umfasst, wobei die externe Wasserversorgungseinheit (32) den Wassertank (33) und die Motorpumpe (34) umfasst, wobei die externe Wasserversorgungseinheit (32) über ein Zwischenverbindungsrohr (35) in fluidischer Verbindung mit dem Dampfbügler steht.

12. Verfahren zum Überwachen einer Erzeugung von Dampf in einer Dampfbügelvorrichtung,
die Dampfbügelvorrichtung umfassend
eine Sohlenplatte (2) mit einer Mehrzahl von Dampfaustrittsöffnungen (11), welche zum Abgeben von Dampf ausgebildet sind,
ein Heizelement (6), welches in thermischem Kontakt mit der Sohlenplatte (2) steht, wobei das Heizelement (6) dazu ausgebildet ist, die Sohlenplatte (2) zu erwärmen,
einen Wassertank (12, 33) in fluidischer Verbindung mit einer Motorpumpe (13, 34), wobei die Motorpumpe (13, 34) dazu ausgebildet ist, der Sohlenplatte (2) zur Erzeugung von Dampf Wasser zuzuführen,
einen Temperatursensor (7), welcher in thermischem Kontakt mit der Sohlenplatte (2) angeordnet ist, wobei der Temperatursensor (7) zum Erzeugen eines Temperatursignals (8) in Abhängigkeit von der Temperatur der Sohlenplatte (2) und zum Bereitstellen des Temperatursignals (8) an eine Steuereinheit (9) ausgebildet ist, wobei das Verfahren umfasst
Auswerten - nach Aktivierung der Motorpumpe (13, 34) - einer nachfolgenden Signalprogression des Temperatursignals (8) und Ableiten aus der Signalprogression, ob Wasser in dem Wassertank (12, 33) vorhanden ist oder nicht;
wobei die Signalprogression des Temperatursignals (8) nach Aktivierung der Motorpumpe (13, 34) die Variation des Temperatursignals (8) als eine Funktion der Zeit nach Beginn der Operation der Motorpumpe (13, 34) ist;
wobei das Verfahren ferner umfasst: einen Schritt des Bestimmens - nach Aktivierung der Motorpumpe (13, 34) - ob ein nachfolgender Rückgang der Temperatur, welche von dem Temperatursignal (8) angezeigt wird, stattfindet, wobei der Temperaturrückgang anzeigt, dass der Sohlenplatte (2) Wasser zugeführt wird;
derart, dass in dem Falle, dass die Signalprogression ein Kühlen der Sohlenplatte (2) anzeigt, dieser Kühleffekt anzeigt, dass immer noch Wasser in dem Wassertank (12, 33) vorhanden ist; und wobei in dem Falle, dass keine solche Kühlung eintritt, die Steuereinheit (9) bestimmt, dass der Wassertank (12, 33) leer ist.

## Revendications

1. Appareil de repassage à la vapeur comprenant :
une semelle (2) avec une chambre de vapeur (15) présentant une pluralité d'orifices de sortie de vapeur (11) configuré afin d'émettre de la vapeur,
un élément chauffant (6) disposé en contact thermique avec la semelle (2), l'élément chauffant (6) étant adapté afin de chauffer la semelle (2),
un réservoir d'eau (12, 33) en raccordement fluidique avec une pompe de moteur (13, 34), la pompe de moteur (13, 34) étant conçue afin d'alimenter en eau la chambre de vapeur (15) afin de générer de la vapeur,
un capteur de température (7) disposé en contact thermique avec la semelle (2), le capteur de température (7) étant conçu afin de générer un signal de température (8) en fonction de la température de la semelle (2),
une unité de commande (9) raccordée à l'élément chauffant (6), au capteur de température (7) et à la pompe de moteur (13, 34),
**caractérisé en ce que**
l'unité de commande (9) est conçue afin d'évaluer, lors de l'activation de la pompe de moteur (13, 34), une progression de signal successive du signal de température (8) et afin de déduire de ladite progression de signal s'il y a de l'eau ou non dans le réservoir d'eau (12, 33) ;
dans lequel la progression de signal du signal de température (8) lors de l'activation de la pompe de moteur (13, 34) est la variation du signal de température (8) en fonction du temps après le démarrage de la pompe du moteur (13, 34) ;
dans lequel l'unité de commande (9) est conçue afin de déterminer, lors de l'activation de la pompe du moteur (13, 34), s'il existe un effet de refroidissement lié au flux d'eau fourni par la pompe du moteur (13, 34),
de sorte que si la progression du signal indique un refroidissement de la semelle (2), cet effet de refroidissement indique qu'il y a toujours de l'eau dans le réservoir d'eau (12 ; 33) ; et
dans lequel si un tel refroidissement n'a pas lieu, l'unité de commande (9) détermine que le réservoir d'eau (12, 33) est vide.

2. Appareil de repassage à la vapeur selon la revendication 1, dans lequel l'unité de commande (9) est conçue afin de déterminer, lors de l'activation de la pompe de moteur (13, 34), s'il y a un déclin successif ou non de la température de la semelle (2).

3. Appareil de repassage à la vapeur selon l'une quelconque des revendications 1 à 2, dans lequel l'unité de commande (9) est conçue afin de déterminer, lors de l'activation de la pompe de moteur (13, 34), s'il existe un déclin successif de la température de la semelle (2) indiquée par le signal de la température (8), et afin de détecter, s'il y a un déclin, que de l'eau est fournie à la semelle (2).

4. Appareil de repassage à la vapeur selon l'une quelconque des revendications 1 à 3, dans lequel l'unité de commande (9) est conçue afin de déterminer, lors de l'activation de la pompe de moteur (13, 34), s'il existe un déclin successif de la température de la semelle (2) indiquée par le signal de température (8), et afin de détecter, s'il n'y a pas de déclin de la température de la semelle (2), que le réservoir d'eau (12, 33) est vide.

5. Appareil de repassage à la vapeur selon l'une quelconque des revendications 1 à 4, dans lequel, si l'unité de commande (9) détermine que, lors de l'activation de la pompe du moteur (13, 34), il n'y a pas de déclin successif de la température de la semelle (2) indiquée par le signal de température (8), l'unité de commande (9) est configurée afin d'arrêter la pompe du moteur (13, 34).

6. Appareil de repassage à la vapeur selon l'une quelconque des revendications 1 à 5, dans lequel l'unité de commande (9) est conçue afin d'évaluer au moins les signaux suivants : un signal de déclenchement de vapeur (17) permettant d'activer la pompe de moteur (13, 34) ou un signal (18) indiquant le fonctionnement de la pompe du moteur et le signal de température (8) du capteur de température (7).

7. Appareil de repassage à la vapeur selon l'une quelconque des revendications 1 à 6, dans lequel l'unité de commande (9) est conçue afin de commander le fonctionnement de l'élément chauffant (6) en fonction du signal de température (8) fourni par le capteur de température (7).

8. Appareil de repassage à la vapeur selon l'une quelconque des revendications 1 à 7, dans lequel l'unité de commande (9) est conçue afin de fournir un contrôle de température de la température de la semelle (2) en fonction du signal de température (8) fourni par le capteur de température (7).

9. Appareil de repassage à la vapeur selon l'une quelconque des revendications 1 à 8, dans lequel le capteur de température (7) est utilisé à la fois pour un contrôle de température de la température de la semelle (2) et afin de déterminer si le réservoir d'eau (12, 33) est vide ou non.

10. Appareil de repassage à la vapeur selon l'une quelconque des revendications 1 à 9, dans lequel l'appareil de repassage à la vapeur est un fer à vapeur à moteur (1), le réservoir d'eau (12) et la pompe de moteur (13) étant localisés dans le logement (3) du fer à vapeur à moteur (1).

11. Appareil de repassage à la vapeur selon l'une quelconque des revendications 1 à 9, dans lequel l'appareil de repassage à la vapeur comprend un fer à vapeur (31) et une unité d'alimentation en eau extérieure (32), l'unité d'alimentation en eau extérieure (32) comprenant le réservoir d'eau (33) et la pompe de moteur (34), dans lequel l'unité d'alimentation en eau externe (32) est raccordée de manière fluidique par le biais d'un tube d'interconnexion (35) avec le fer à vapeur (31).

12. Procédé de contrôle d'une génération de vapeur dans un appareil de repassage à vapeur,
l'appareil de repassage à vapeur comprenant :
une semelle (2) avec une pluralité d'orifices de sortie de vapeur (11) configurés afin d'émettre de la vapeur,
un élément chauffant (6) disposé en contact thermique avec la semelle (2), l'élément chauffant (6) étant conçu afin de chauffer la semelle (2),
un réservoir d'eau (12, 33) en raccordement fluidique avec une pompe de moteur (13, 34), la pompe de moteur (13, 34) étant conçue afin d'alimenter en eau la semelle (2) afin de générer de la vapeur,
un capteur de température (7) disposé en contact thermique avec la semelle (2), le capteur de température (7) étant conçu afin de générer un signal de température (8) en fonction de la température de la semelle (2), et afin de fournir ledit signal de température (8) à une unité de commande (9) ;
dans lequel le procédé comprend :
l'évaluation, lors de l'activation de la pompe de moteur (13, 34), d'une progression de signal successive du signal de température (8) et la déduction de ladite progression de signal s'il y a de l'eau ou non dans le réservoir d'eau (12, 33) ;
dans lequel la progression de signal du signal de température (8) lors de l'activation de la pompe de moteur (13, 34) est la variation du signal de température (8) en fonction du temps après le démarrage du fonctionnement de la pompe de moteur (13, 34) ;
le procédé comprend en outre une étape consistant à déterminer, lors de l'activation de la pompe de moteur (13, 34), s'il existe un déclin successif de la température indiquée par le signal de température (8), ledit déclin de température indiquant que de l'eau est fournie à la semelle (2) ;
de sorte que si la progression de signal indique un refroidissement de la semelle (2), cet effet de refroidissement indique qu'il y a toujours de l'eau dans le réservoir d'eau (12, 33) ; et
dans lequel si un tel refroidissement n'a pas lieu, l'unité de commande (9) détermine que le réservoir d'eau (12, 33) est vide.
